# EUROPÄISCHE PATENTSCHRIFT

(11) **EP 2 282 863 B1**
(45) Veröffentlichungstag und Bekanntmachung des Hinweises auf die Patenterteilung: **03.07.2013**
(21) Anmeldenummer: 09745599.2
(22) Anmeldetag: 16.03.2009
(51) Int. Cl.: B23D 49/16, B23D 51/02

(54) **WERKZEUGMASCHINE, INSBESONDERE HANDGEHALTENE WERKZEUGMASCHINE**
POWER TOOL, ESPECIALLY HAND-HELD POWER TOOL
MACHINE-OUTIL, EN PARTICULIER MACHINE-OUTIL PORTATIVE

(30) Priorität: 14.05.2008 DE 102008001756
(43) Veröffentlichungstag der Anmeldung: 16.02.2011
(73) Patentinhaber: Robert Bosch GmbH, 70442 Stuttgart (DE)
(72) Erfinder: KOEDER, Thilo, 70839 Gerlingen (DE); PLATZER, Joachim, 71686 Remseck-Hochberg (DE); HOFFMANN, Ulli, 75223 Niefern-Oeschelbronn (DE)
(86) Internationale Anmeldenummer: PCT/EP2009/053034
(87) Internationale Veröffentlichungsnummer: WO 2009/138266

(56) Entgegenhaltungen:
- EP-A- 1 598 134
- DE-U1- 8 603 266
- US-A- 3 230 022
- US-A- 5 462 368

## Beschreibung

Die Erfindung betrifft eine Werkzeugmaschine gemäß dem Oberbegriff des Anspruches 1.

### Stand der Technik

Werkzeugmaschinen der vorgenannten Art sind als elektromotorisch angetriebene Stichsägen aus der EP 1 598 134 B1 bekannt und können bei hubbeweglich angetriebenem Sägeblatt als Pendelhubsägen mit zusätzlich um eine quer zur Längsachse des Sägeblattes schwenkbeweglich angetriebenem Sägeblatt sowie als sogenannte Scrolling Jigsaws betrieben werden, bei denen das hubbeweglich angetriebene Sägeblatt zusätzlich um seine Längsachse verdrehbar ist.

In allen Betriebsarten ist das Sägeblatt bei unterhalb seiner Verbindung zwischen Sägeblatt und Hubstange vorgesehener Sägeblattaufnahme über ein Stützglied abgestützt, das, bezogen auf die Drehachse der Hubstange und des zu dieser lagefesten Sägeblattes, mit der Hubstange mitdrehend angeordnet ist und das das Sägeblatt in Erstreckungsrichtung der Sägeblattebene beaufschlagt. Als Stützglied ist eine Stützrolle mit umfangsseitig eingekerbter, rinnenförmiger Aufnahme vorgesehen, in die das Sägeblatt mit seinem Rückenbereich eingreift.

Aufgrund dessen, dass das als Rolle ausgebildete Stützglied im Scrolling-Modus mit der Hubstange und mit dem Sägeblatt mitdreht, somit in allen Betriebsarten bezogen auf die Drehachse von Hubstange und Sägeblatt gleiche Drehlagen des Stützgliedes und des Sägeblattes gegeben sind, sind ungeachtet ünterschiedlicher Belastungsverhältnisse in den verschiedenen Betriebsarten die Abstützgegebenheiten zwischen Sägeblatt und Stützglied weitgehend die gleichen, wenn auch aufgrund der unterschiedlichen Belastungsverhältrisse bei unterschiedlichem Verschleiß insbesondere des Stützgliedes. Entsprechende Verschleißmarken können letztlich zu einer Beeinträchtingung der Führungsqualität und des Arbeitsergebnisses führen.

Aus der DE 86 03 266 U1 ist ein Sägeblatt für eine Stichsäge bekannt, welches durch zwei aufeinanderliegende, entlang des Sägeblattrückens gefaltete Blattabschnitte gebildet ist, wobei aufeinanderfolgende, jeweils von Zahnhälften beider Zahnbereiche der Zahnabschnitte gebildete Zähne zur Erzielung einer Schränkung wechselseitig abgebogen sind und die außen- und innenliegende Zahnflanke jedes Zahns jeweils einen Stanzgrat aufweist.

Das Sägeblatt der DE 86 03 266 U1 wird aus entsprechenden Stahlblechabschnitten herausgestanzt, wobei das Stanzteil jedoch die Außenkontur zweier spiegelbildlich zueinander angeordneter, üblicher Sägeblätter aufweist, die an ihrem Sägeblattrücken einstückig miteinander verbunden sind. Das Sägeblatt ist entlang der so gebildeten Stoßkante im Sägeblttrücken gefaltet, wobei die beiden auf diese Weise gebildeten Blattabschnitte aufeinanderliegen und sich ein im Wesentlichen abgerundeter Sägeblattrücken ergibt. Die Faltung wird dabei derart durchgeführt, dass der beim Stanzen gebildete Stanzgrat an beiden Blattabschnitten nach außen weist. Beide Blattabschnitte besitzen jeweils einen Zahnbereich, der aus einer Vielzahl von Zahnhälften besteht, wobei durch das Aufeinanderliegen der Blattabschnitte aus jeweils zwei Zahnhälften ein Zahn gebildet wird.

Aus der US 5, 462,368 ist ein Kuglelager bekannt, dass in einer Ausführungsform eine konkave Oberflächenkrümmung aufweist.

### Offenbarung der Erfindung

Durch die Erfindung soll unterschiedlichen Belastungsgegebenneiten zwischen dem Stützglied und dem Sägeblatt in den verschiedenen Betriebsarten Rechnung getragen werden können, insbesondere aber auch eine Ausgestaltung erreicht werden, die nicht an die mit dem Sägeblatt mitdrehende Anordnung des Stützglieges geounden ist, sondern auch in Verbindung mit Ausgestaltungen der Werkzeugmasching ginzusetzen ist, bei denen im Scrolling-Modus das Sägeblatt gegenüber dem nicht mitdrehenden Stützglied schwenkt.

Gemäß der Erfindung lässt sich dies mit den Merkmalen des Anspruches 1 in einfacher Weise erreichen, wobei die in diesem Zusammenhang vorgeschenen Ausgestaltungen des Stützgliedes auch bei anderen Abstützverhältnissen zwischen Stützglied und Sägeblatt mit Vorteil eingesetzt werden können.

Die Erfindung geht im Anspruch 1 davon aus, dass das Stützglied zumindest zwei Betriebslagen aufweist, die wahlweise in Ansatz gebracht werden können, so dass unterschiedlichen Anforderungen durch unterschiedliche Gestaltung der jeweils in die Abstützlage zum Sägeblatt gebrachten Stützbereiche des Stützgliedes Rechnung getragen werden Kann.

Eine besonders einfache Lösung für eine derartige Ausgestaltung liegt darin, dass die Stützbereiche unterschiedlichen, insbesonder einander gegenüberliegenden Seiten des Stützgliedes zugeordnet werden, so dass durch Umsetzen des Stützgliedes, insbesondere durch Drehen oder Schwenken des Stützgliedes wechselweise in Anpassung an den jeweiligen Betriebsmodus der eine oder der andere Stützbereich genutzt werden kann.

Eine einfache Umstellung mit der Möglichkeit, die jeweilige Lage des Stützgliedes noch mit einfachen Mitteln zu sichern, besteht darin, dass das Stützglied um eine zwischen seinen einander gegenüberliegenden Stützbereichen liegende Schwenkachse mit einem jeweiligen Stützbereich in eine jeweilige Arbeitsposition verstellt werden kann, wobei es zweckmäßig ist, wenn die Schwenkachse für das Stützglied senkrecht zu einer die Längsachse des Sägeblattes enthaltenen Ebene verläuft.

Die jeweiligen Stützbereiche können durch Stützelemente gebildet sein, die zum Stützglied lagefest sind, oder auch durch Stützelemente, die ihrerseits beweglich mit dem Stützglied verbunden sind. Diesbezüglich bieten sich Rollen oder auch walzenförmige Körper an, die in ihrer Umfangskontur an den jeweiligen Einsatzzweck angepasst sind und bevorzugt konkav eingeformte Umfangskonturen aufweisen, wenn, zum Beispiel im Scrolling-Modus, eine Abstützung des verdrehbaren Sägeblattes gegenüber dem lagefesten Stützelement gefordert ist. Demgegenüber ist zum Beispiel für den Pendelhubmodus bei in der Pendelebene mit dem Sägeblatt bewegtem Stützelement eine Kontur desselben zweckmäßig, die für das Sägeblatt im Rückenbereich eine gewisse Querabstützung bewirken kann, also beispielsweise eine nutartige Führungskontur.

Ungeachtet einer Ausgestaltung in der einen oder anderen vorstehend angesprochenen Form ist es zweckmäßig, das verschwenkbare Stützglied in seinen jeweiligen Schwenkstellungen durch einfachste Verriegelungsmittel festzulegen, so beispielsweise durch Rasthalterungen oder dergleichen.

Eine Ausgestaltung mit einer Führungskontur, bei der der konvex eingewölbte Konturbereich eine im Querschnitt verrundete Stützkontur bildet, deren Verrundungsradius dem Abstand der Drehachse des Sägeblattes vom Sägeblattrücken zumindest im Wesentlichen entspricht, stellt eine besonders günstige Lösung dar. Dies auch bei Ausgestaltungen von Stützelementen als Stützrollen und auch bei im Scrolling-Modus nicht mit dem Sägeblatt mitschwenkendem Stützglied, da im Wesentlichen in aller Regel nur ein Schwenkbereich des Sägeblattes von etwa +/-30° abzudecken ist, so dass es im Rahmen der Erfindung auch möglich ist, unabhängig vom Betriebsmodus die Abstützung des Sägeblattrückens über das jeweils gleiche Stützglied oder Stützelement, etwa eine Stützrolle vorzunehmen.

Insbesondere gilt dies, wenn das Sägeblatt eine verrundet in seine Flanken einlaufende Rückenfläche aufweist, so dass sich zwischen Sägeblatt und jeweiligem Stützglied, insbesondere auch einer gemäß vorstehender Erläuterung ausgebildeten Stützrolle, lediglich eine linienförmige Abstützung ergibt, durch die ein Verhaken bei Schwenkbewegungen des Sägeblattes gegenüber dem Stützglied praktisch ausgeschlossen ist, so dass auch entsprechende Einlauf- und Rattermarken vermieden werden.

Weitere Vorteile und zweckmäßige Ausführungen sind den Ansprüchen, der Figurenbeschreibung und den Zeichnungen zu entnehmen. Es zeigen:
- Fig. 1: eine schematisierte Darstellung einer als handgeführte Werkzeugmaschine ausgestalteten, elektrisch anzutreibenden Stichsäge, die in unterschiedlichen Betriebsweisen zu betreiben ist,
- Fig. 2: von einer Stichsäge ähnlich jener Fig. 1 den Arbeitsbereich mit Sägeblatt und diesem rückenseitig zugeordnetem Stützglied, wiederum in Perspektive und vereinfacht,
- Fig. 3 und 4: Ausgestaltungen eines Stützgliedes, das gesonderte, durch Verstellen des Stützgliedes in ihre Stützlage zum Sägeblatt zu verstellende Stützbereiche aufweist, wiederum schematisiert und in Perspektive,
- Fig. 5: in perspektivischer Ansicht eine Stützrolle, die, entsprechend Fig. 4, als Stützelement Bestandteil eines Stützgliedes sein kann, oder über die als eigenständiges Stützglied die Abstützung eines Sägeblattes auch in unterschiedlichen Betriebsweisen der Werkzeugmaschine erfolgen kann, und
- Fig. 6: in schematischer Darstellung eine Ausgestaltung eines Sägeblattes mit verrundetem Sägeblattrücken in Zuordnung zu einem Stützglied mit konkav eingewölbter Stützkontur.

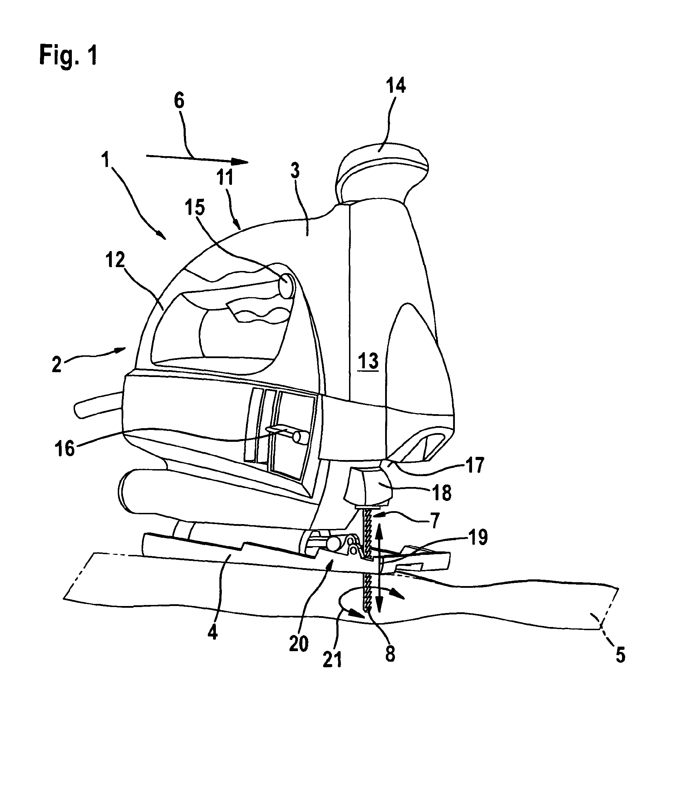

Fig. 1 veranschaulicht als Beispiel einer Werkzeugmaschine 1 eine handgehaltene Maschine in Form einer Stichsäge 2, die ein Gehäuse 3 aufweist und die über eine Fußplatte 4 auf einem Werkstück 5 abgestützt ist.

Im in Arbeitsrichtung vorderen Bereich der Stichsäge 2 weist diese als Arbeitswerkzeug 7 ein Sägeblatt 8 auf. Dieses greift im Arbeitsbetrieb auf das Werkstück 5 ein, auf dem die Stichsäge 2 über eine Fußplatte 4 verschieblich abgestützt ist.

Die Stichsäge 2 weist für den Benutzer ein Sichtfeld 10 auf, das sich zumindest über den durch das Sägeblatt 8 bestimmten Arbeitsbereich 9 erstreckt. Am Gehäuse 3 der Stichsäge 2 ist, in Hochrichtung gegenüberliegend zu der um eine in Arbeitsrichtung 6 verlaufende Schwenkachse feststellbar abgestützten Fußplatte 4, eine Handhabe 11 vorgesehen, deren Griffbügel 12 auf einen Führungsknauf 14 zuläuft. Untergreifend zum Griffbügel 12 ist eine Schalteranordnung 15 vorgesehen, über die die Stichsäge 2 ein- und auszuschalten ist. Unterschiedliche Betriebsmodi der Stichsäge 2 lassen sich über die längsseitlich zum Gehäuse 3 vorgesehene Schalteinrichtung 16 einstellen. Der Stirnwandbereich 13 des Gehäuses 3 ist zulaufend auf die Fußplatte 7 stufig entgegen der Arbeitsrichtung abgesetzt. Die Stufe 17 überdeckt die Werkzeugaufnahme 18 für das durch das Sägeblatt 8 gebildete, angetriebene Arbeitswerkzeug 7.

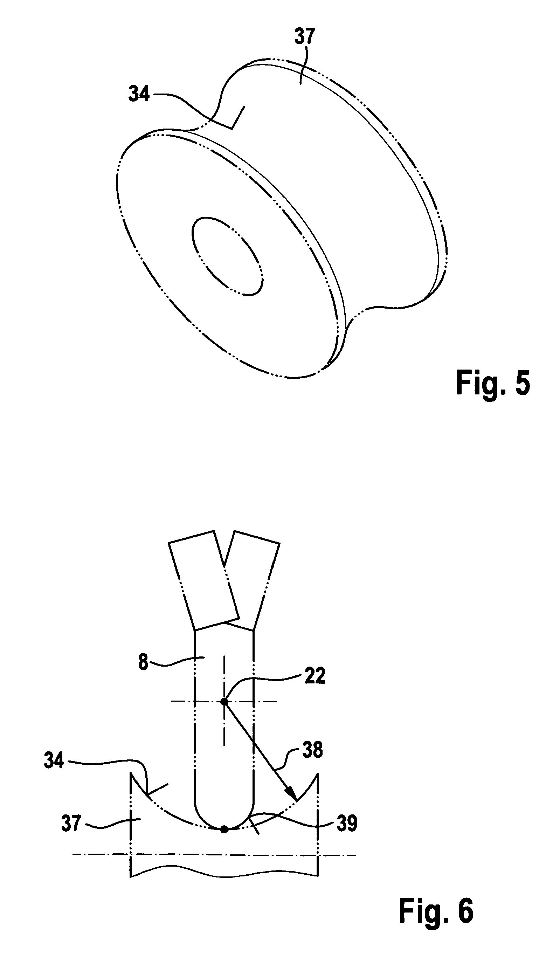

Das Sägeblatt 8 der insgesamt elektrisch betriebenen Werkzeugmaschine 1 weist eine Grundarbeitsstellung auf, in der es, wie durch den Pfeil 19 angedeutet, lediglich hubbeweglich angetrieben ist. Dem Rücken des Sägeblattes 8 ist eine Abstützung 20 zugeordnet. Diese Abstützung 20 ist über einen nicht weiter gezeigten Antrieb in Richtung der Ebene des Sägeblattes 8, also in Sägerichtung wiederum hubbeweglich angetrieben (Pfeil 23). Hierdurch ergibt sich ein weiterer Arbeitsmodus, nämlich der sogenannte Pendelhubbetrieb, bei dem das Sägeblatt 8 um eine quer zu seiner Blattebene verlaufende, nicht gezeigte Schwenkachse überlagert zur in Längsrichtung des Sägeblattes 8 verlaufenden Hubbewegung verschwenkbar ist. In einer dritten Betriebsweise, veranschaulicht durch den Pfeil 21, ist das Sägeblatt 8 zusätzlich zur Hubbewegung in Richtung seiner Längsachse um eine in deren Richtung verlaufende Drehachse 22 verdrehbar (Fig. 6). Dadurch ist das Sägeblatt 8 in zu seiner Geradeaus-Arbeitsrichtung gemäß Pfeil 6 winklige Arbeitsrichtungen verstellbar, so dass die Stichsäge als sogenannte "Scrolling Jigsaw" nutzbar und bei entsprechend gesteuerter Verstellung auch als halbautonome Stichsäge zu betreiben ist. Hierbei übernimmt der die Stichsäge 2 haltende Benutzer im Wesentlichen nur noch den grob auf die Arbeitsrichtung 6 ausgerichteten Vorschub, während eine exakte, an einer Wegvorgabe ausgerichtete Positionierung durch Einstellen des Sägeblattes 2 auf eine jeweils an der Wegvorgabe ausgerichtete Drehstellung erfolgt.

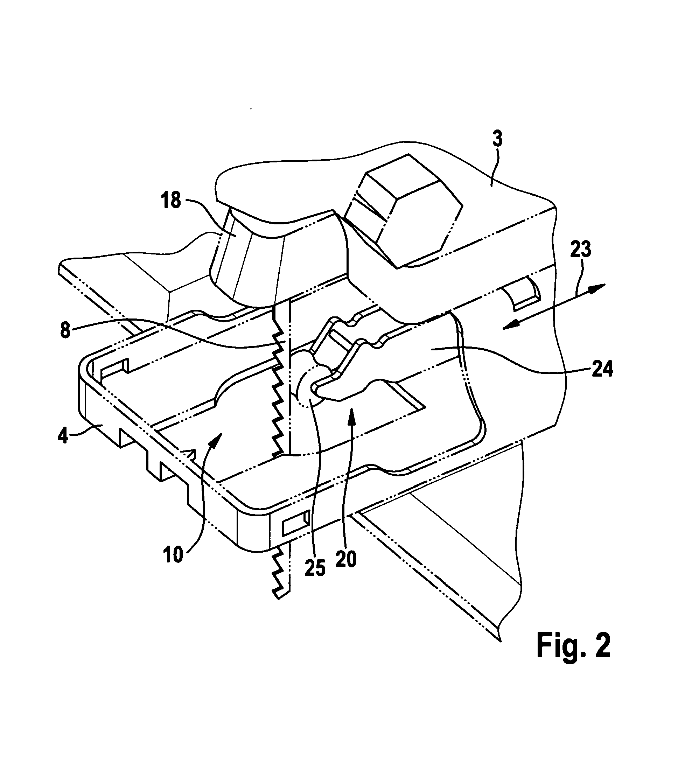

Die Abstützung 20 weist in der in Fig. 2 veranschaulichten Ausgestaltung auslaufend auf das Sägeblatt 8 einen in Richtung des Pfeiles 23 verstellbaren Tragrahmen 24 für ein Stützglied 25 auf, das in Fig. 2 als Stützrolle 26 gestaltet ist.

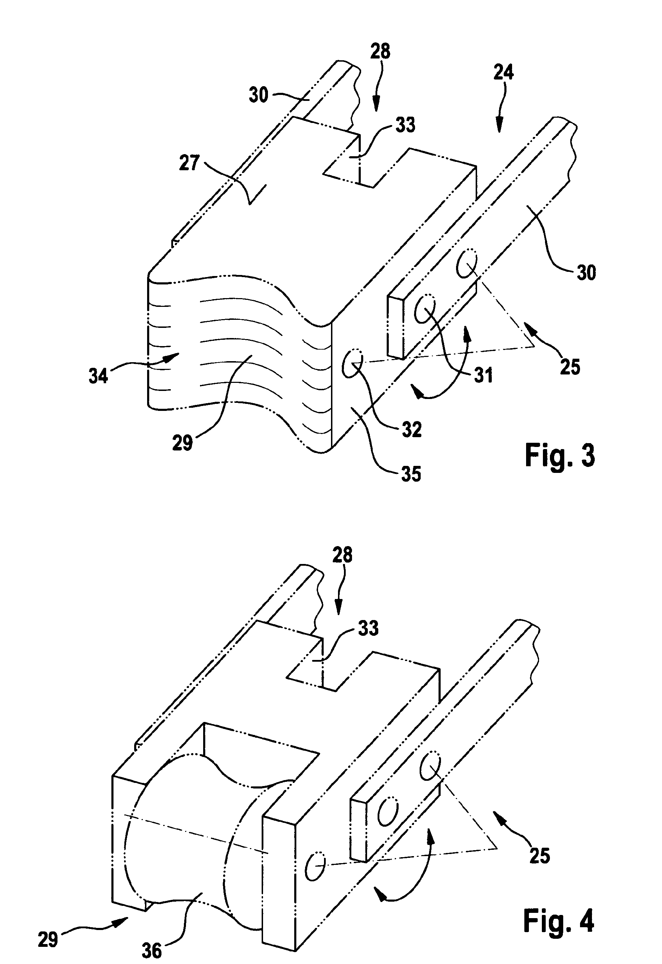

Erfindungsgemäße Ausgestaltungen eines solchen Stützgliedes 25 zeigen die Fig. 3 und 4, wobei das Stützglied 25 gemäß diesen Ausgestaltungen einem Stützkörper 27 zugeordnete Stützbereiche 28, 29 aufweist, welche am kastenförmigen Stützkörper 27 einander gegenüberliegenden Enden zugeordnet sind.

In Fig. 3 ist der kastenförmige Stützkörper 27 an dem durch zwei Tragarme 30 symbolisierten Tragrahmen 24 schwenkbar angeordnet, und zwar um eine zwischen den Stützbereichen 28 und 29 liegende Schwenkachse 31. In um 180° versetzten Schwenklagen ist der Stützkörper 27 gegenüber den Tragarmen 30 verriegel- oder verrastbar, wie durch angedeutete Rastpunkte 32 veranschaulicht. Insoweit ist der Aufbau bei den Fig. 3 und 4 gleich.

In der Ausgestaltung gemäß Fig. 3 ist der Stützbereich 28 als Führungsrinne 33 ausgestaltet, die in ihren Abmessungen auf den Querschnitt des Sägeblattes 8 abgestimmt ist, so dass im Pendelhubbetrieb bei zu den Darstellungen gemäß Fig. 3 und 4 um 180° gedrehter Stellung des Stützkörpers 27 das Sägeblatt 8 mit seinem Rücken in die U-förmige Führungsrinne 33 eingreift und dadurch im Pendelhubbetrieb, aber auch im Regelarbeitsbetrieb, eine Querführung für das Sägeblatt 8 durch die Schenkel der U-förmigen Rinne 33 erreicht ist.

Im gegenüberliegenden Stützbereich 29 bildet, analog zum Stützbereich 28, der Stützkörper 27 selbst eine konkav eingewölbte Führungsbahn 34 für das im Scrolling-Modus relativ zum feststehenden Stützkörper 27 schwenkende Sägeblatt 8. Da der Schwenkbereich des Sägeblattes 8 im Scrolling-Modus einen Winkelbereich von etwa +/- 30° abdeckt, ergibt sich schon bei relativ flacher konvexer Einwölbung der Führungsbahn 34 eine hinreichende Abstützung für das Sägeblatt 8, verbunden mit einer hinreichenden seitlichen Führung. Eine zusätzliche Sicherheit gegen seitliches Auslaufen des Sägeblattes 8 aus der Führungsbahn 34 ist noch dadurch zu erreichen, dass die Führungsbahn 34 verrundet in die Seitenflächen 35 des Stützkörpers 27 übergeht, und zwar bei in Richtung auf den verrundeten Übergang gegenüber dem konvex eingewölbten Bereich der Führungsbahn 34 steiler angestellten Randzonen. Auch für diesen Stützbereich 29 kann aber eine Ausgestaltung mit einer Führungsrinne, etwa entsprechend der Gestaltung für den Führungsbereich 28 zweckmäßig sein.

Statt einer zum Stützkörper 27 lagefesten Führungsbahn 34 gemäß Fig. 3 ist der Stützbereich 29 in der Ausgestaltung gemäß Fig. 4 durch ein Stützelement in Form einer Stützrolle 36 gebildet, die drehbar zum Stützkörper 27 gelagert ist und die bei konkav eingewölbter Umfangsfläche bevorzugt der Stützrolle 37 gemäß Fig. 5 entspricht. Die Stützrolle 37 ist wie die Stützrolle 36 konkav eingewölbt, wobei der Verrundungsradius 38, wie in Fig. 6 veranschaulicht, zumindest nahezu, bevorzugt aber genau dem Abstand des Sägeblattrückens 39 von der Drehachse 22 des Sägeblattes 8 entspricht. Eine derartige Abstimmung zwischen der Gestaltung der Führungsbahn 34 und der Lage der Führungsbahn 34 zur Drehachse 22 des Sägeblattes 8 stellt sicher, dass das Sägeblatt 8 in allen Drehlagen lotrecht, oder zumindest nahezu lotrecht gegen die Führungsbahn 34 der Stützrolle 37 abgestützt ist.

Zweckmäßigerweise sind die Führungsbahnen 34 sowohl als stehende Führungsbahnen wie auch als durch Rollen 36, 37 gebildete Führungsbahnen gehärtet. Im Rahmen der Erfindung liegt es auch, Rollen drehfest angeordnet für feststehende Führungsbahnen zu verwenden. Ferner können auch bei durch Rollen gebildeten Führungsbahnen diese rinnenförmig ausgebildet sein, um eine Querführung durch seitlichen Übergriff zum Sägeblatt 8, und damit eine seitliche Abstützung des Sägeblattes zu erreichen.

Fig. 6 veranschaulicht weiter eine Ausgestaltung des Sägeblattes 8 mit verrundetem Sägeblattrücken 39, so dass sich zwischen dem Sägeblatt 8 und der Führungsbahn 34 der jeweiligen Stützrolle, so beispielsweise der Stützrolle 37, nur eine in Annäherung linienförmige Berührung ergibt, die ein Verhaken oder Verkanten zwischen dem Sägeblatt 8 und der Stützrolle 37 beim Schwenken des Sägeblattes 8 gegenüber der Stützrolle 37 praktisch ausschließt. Zudem wird dadurch der Verschleiß verringert, wobei eine solche Ausgestaltung des Sägeblattes 8 auch dann zweckmäßig ist, wenn die Abstützung nicht gegen eine Stützrolle, zum Beispiel gegen die Stützrolle 37, sondern gegen die Führungsbahn 34 des feststehenden Stützkörpers 27 erfolgt, wenn entsprechende Bemessungsverhältnisse gegeben sind.

## Patentansprüche

1. Werkzeugmaschine, insbesondere handgehaltene Werkzeugmaschine, (1) in Form einer Stichsäge (2), die in unterschiedlichen Betriebsweisen zu betreiben ist und deren Sägeblatt (8) im Pendelhubmodus um eine zu seiner Längserstreckung quer verlaufende Drehachse verschwenkbar und im Scrolling-Modus um seine Drehachse (22) verdrehbar ist sowie in beiden Betriebsweisen unterhalb der Sägeblattaufnahme (18) rücksenseitig gegen ein Stützglied (25) abgestützt ist, **dadurch gekennzeichnet, dass** das Stützglied (25) zur Abstützung des Sägeblattes (8) im Pendelhubmodus und im Scrolling-Modus gesonderte Stützbereiche (28, 29) aufweist, die durch Umstellung des Stützgliedes (25) im jeweiligen Modus wechselweise in Einsatz zu bringen sind.

2. Werkzeugmaschine nach Anspruch 1, **dadurch gekennzeichnet, dass** die Stützbereiche (28, 29) an unterschiedlichen, insbesondere einander gegenüberliegenden Seiten des Stützgliedes (25) vorgesehen sind.

3. Werkzeugmaschine nach Anspruch 1 oder 2, **dadurch gekennzeichnet, dass** die Stützbereiche (28, 29) durch Verschwenkung des Stützgliedes (25) insbesondere um eine zwischen den Stützbereichen (28, 29) liegende Achse (31) in ihre jeweilige Arbeitsposition verstellbar sind.

4. Werkzeugmaschine nach Anspruch 3, **dadurch gekennzeichnet, dass** die Schwenkachse (31) für das Stützglied (25) senkrecht zu einer die Drehachse (22) des Sägeblattes (8) enthaltenden Ebene verläuft.

5. Werkzeugmaschine nach einem Ansprüche 1 bis 4, **dadurch gekennzeichnet, dass** die Stützbereiche (28, 29) für den Pendelhubmodus und für den Scrolling-Modus unterschiedliche Konturen aufweisen.

6. Werkzeugmaschine nach einem der Ansprüche 1 bis 5, **dadurch gekennzeichnet, dass** zumindest einer der Stützbereiche (28, 29) an einem vom Stützglied (25) getragenen, zum Stützglied lagefesten oder beweglichen Stützelement vorgesehen ist.

7. Werkzeugmaschine nach einem der vorhergehenden Ansprüche, **dadurch gekennzeichnet, dass** als bewegliches Stützelement eine Stützrolle (36, 37) vorgesehen ist.

8. Werkzeugmaschine nach einem der vorhergehenden Ansprüche, **dadurch gekennzeichnet, dass** der für den Pendelhubmodus vorgesehene Stützbereich (28) eine Führungsrinne (33) für das Sägeblatt (8) bildet.

9. Werkzeugmaschine nach einem der Ansprüche 1 bis 8, **dadurch gekennzeichnet, dass** der für den Scrolling-Modus vorgesehene Stützbereich (29) eine konkav eingewölbte Stützkontur aufweist.

10. Werkzeugmaschine nach Anspruch 9, **dadurch gekennzeichnet, dass** der für den Scrolling-Modus vorgesehene Stützbereich (29) durch eine Stützrolle (36, 37) gebildet ist.

11. Werkzeugmaschine nach Anspruch 9 oder 10, **dadurch gekennzeichnet, dass** die konkav eingewölbte Kontur des Stützbereiches (29) verrundet in seitliche Flanken übergeht.

12. Werkzeugmaschine nach einem der vorhergehenden Ansprüche, **dadurch gekennzeichnet, dass** die eingewölbte Kontur eines Stützbereiches (28, 29) einen Verrundungsradius (38) aufweist, der zumindest in Annäherung dem Abstand der Drehachse (22) des Sägeblattes (8) zum Sägeblattrücken (39) entspricht.

13. Werkzeugmaschine nach einem der Ansprüche 1 bis 12, **dadurch gekennzeichnet, dass** das Stützglied (25) in seiner jeweiligen Schwenkstellung gegenüber seinem Tragrahmen (30) verriegelbar ist.

## Claims

1. Power tool, especially hand-held power tool (1), in the form of a jigsaw (2), which can be operated in different operating modes and the saw blade (8) of which is pivotable in the pendulum stroke mode about an axis of rotation running transversely with respect to the longitudinal extent thereof and is rotatable in the scrolling mode about the axis of rotation (22) thereof, and, in the two operating modes, is supported on the rear side below the saw blade holder (18) against a supporting member (25), **characterized in that** the supporting member (25) for supporting the saw blade (8) in the pendulum stroke mode and in the scrolling mode has separate supporting regions (28, 29) which can be brought alternately into use by repositioning the supporting member (25) in each mode.

2. Power tool according to Claim 1, **characterized in that** the supporting regions (28, 29) are provided on different, in particular mutually opposite, sides of the supporting member (25).

3. Power tool according to Claim 1 or 2, **characterized in that** the supporting regions (28, 29) are adjustable into the respective working position thereof by pivoting the supporting member (25), in particular about an axis (31) lying between the supporting regions (28, 29).

4. Power tool according to Claim 3, **characterized in that** the pivot axis (31) for the supporting member (25) runs perpendicularly to a plane containing the axis of rotation (22) of the saw blade (8).

5. Power tool according to one of Claims 1 to 4, **characterized in that** the supporting regions (28, 29) for the pendulum stoke mode and for the scrolling mode have different contours.

6. Power tool according to one of Claims 1 to 5, **characterized in that** at least one of the supporting regions (28, 29) is provided on a supporting element which is carried by the supporting member (25) and is positionally fixed or is moveable with respect to the supporting member.

7. Power tool according to one of the preceding claims, **characterized in that** a supporting roller (36, 37) is provided as the moveable supporting element.

8. Power tool according to one of the preceding claims, **characterized in that** the supporting region (28) provided for the pendulum stroke mode forms a guide channel (33) for the saw blade (8).

9. Power tool according to one of Claims 1 to 8, **characterized in that** the supporting region (9) provided for the scrolling mode has a supporting contour which is curved inwards concavely.

10. Power tool according to Claim 9, **characterized in that** the supporting region (29) provided for the scrolling mode is formed by a supporting roller (36, 37).

11. Power tool according to Claim 9 or 10, **characterized in that** that contour of the supporting region (29) which is curved inwards concavely merges in rounded form into lateral flanks.

12. Power tool according to one of the preceding claims, **characterized in that** the inwardly curved contour of a supporting region (28, 29) has a rounding radius (38) which at least approximately corresponds to the distance of the axis of rotation (22) of the saw blade (8) from the saw blade back (39).

13. Power tool according to one of Claims 1 to 12, **characterized in that** the supporting member (25) is lockable in each pivoted position thereof in relation to the carrying frame (13) thereof.

## Revendications

1. Machine-outil, notamment machine-outil portative (1) prenant la forme d'une scie sauteuse (2) pouvant être utilisée dans différents modes de fonctionnement et dont la lame de scie (8) peut pivoter, dans le mode de course pendulaire, autour d'un axe de rotation s'étendant transversalement par rapport à son extension longitudinale et pouvant être vrillé, dans le mode déroulant, autour de son axe de rotation (22) ainsi que pouvant être maintenu, en partant du côté arrière, dans les deux modes de fonctionnement, en dessous de l'élément de logement de lame de scie (18), contre un élément de maintien (25), **caractérisée en ce que** l'élément de maintien (25) comporte des zones de maintien (28, 29) séparées pour maintenir la lame de scie (8) dans le mode de course pendulaire et dans le mode déroulant, lesdites zones étant amenées alternativement dans l'élément encastrable par réglage de l'élément de maintien (25) dans le mode respectif.

2. Machine-outil selon la revendication 1, **caractérisée en ce que** les zones de maintien (28, 29) sont prévues au niveau des différents côtés, notamment opposés les uns par rapport aux autres, de l'élément de maintien (25).

3. Machine-outil selon la revendication 1 ou 2, **caractérisée en ce que** les zones de maintien (28, 29) peuvent être déplacées dans leur position de travail respective par pivotement de l'élément de maintien (25), notamment autour d'un axe (31) situé entre les zones de maintien (28, 29).

4. Machine-outil selon la revendication 3, **caractérisée en ce que** l'axe de pivotement (31) de l'élément de maintien (25) s'étend perpendiculairement à un plan contenant l'axe de rotation (22) de la lame de scie (8).

5. Machine-outil selon l'une quelconque des revendications 1 à 4, **caractérisée en ce que** les zones de maintien (28, 29) présentent des contours différents pour le mode de course pendulaire et pour le mode déroulant.

6. Machine-outil selon l'une quelconque des revendications 1 à 5, **caractérisée en ce qu'**au moins une des zones de maintien (28, 29) est prévue au niveau d'un élément de maintien supporté par l'élément de maintien (25) et fixe ou mobile par rapport à l'élément de maintien.

7. Machine-outil selon l'une quelconque des revendications précédentes, **caractérisée en ce que** l'élément de maintien mobile prévu est un rouleau de maintien (36, 37).

8. Machine-outil selon l'une quelconque des revendications précédentes, **caractérisée en ce que** la zone de maintien (28) prévue pour le mode de course pendulaire forme une rigole de guidage (33) pour la lame de scie (8).

9. Machine-outil selon l'une quelconque des revendications 1 à 8, **caractérisée en ce que** la zone de maintien (29) prévue pour le mode déroulant comporte un contour de maintien bombé dans le plan concave.

10. Machine-outil selon la revendication 9, **caractérisée en ce que** la zone de maintien (29) prévue pour le mode déroulant est formée par un rouleau de maintien (36, 37).

11. Machine-outil selon la revendication 9 ou 10, **caractérisée en ce que** le contour bombé dans le plan concave de la zone de maintien (29) se transforme dans l'arrondi en des flancs latéraux.

12. Machine-outil selon l'une quelconque des revendications précédentes, **caractérisée en ce que** le contour bombé d'une zone de maintien (28, 29) présente un rayon de courbure (38) correspondant au moins approximativement à la distance de l'axe de rotation (22) de la lame de scie (8) par rapport au dos de lame de scie (39).

13. Machine-outil selon l'une quelconque des revendications 1 à 12, **caractérisée en ce que** l'élément de maintien (25) peut être verrouillé dans sa position de pivotement respective par rapport à son châssis porteur (30).
